(19) Europäisches Patentamt / European Patent Office / Office européen des brevets

(11) **EP 2 840 900 B1**

(12) **EUROPEAN PATENT SPECIFICATION**

(45) Date of publication and mention
of the grant of the patent:
**12.06.2019 Bulletin 2019/24**

(21) Application number: **13719494.0**

(22) Date of filing: **24.04.2013**

(51) Int Cl.:
*A21D 8/04* *(2006.01)*     *A21D 10/00* *(2006.01)*
*A21D 10/04* *(2006.01)*

(86) International application number:
**PCT/EP2013/058537**

(87) International publication number:
**WO 2013/160370 (31.10.2013 Gazette 2013/44)**

(54) **METHOD OF BAKING**

BACKVERFAHREN

PROCÉDÉ DE CUISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2012 EP 12165507
02.05.2012 EP 12166423**

(43) Date of publication of application:
**04.03.2015 Bulletin 2015/10**

(73) Proprietor: **Novozymes A/S
2880 Bagsvaerd (DK)**

(72) Inventors:
• **BELLIDO, Guillermo
DK-2880 Bagsvaerd (DK)**
• **GAZZOLA, Gianluca
CH-4123 Allschwil (CH)**

(74) Representative: **NZ EPO Representatives
Krogshoejvej 36
2880 Bagsvaerd (DK)**

(56) References cited:
| | |
|---|---|
| WO-A1-01/27251 | WO-A1-2009/106575 |
| WO-A2-01/29222 | WO-A2-2006/032281 |
| WO-A2-2008/092907 | US-A1- 2003 100 092 |

• **HILLE JAN D R: "CAKEZYME (TM): UNLIMITED OPPORTUNITIES FOR NEW PRODUCT DEVELOPMENT IN THE CAKE INDUSTRY", ALIMENTARIA, CSIC, ES, no. 388, 1 November 2007 (2007-11-01), pages 91-92, XP008156522, ISSN: 0300-5755**
• **GUO Z ET AL: "Enzymatic modification of phospholipids for functional applications and human nutrition", BIOTECHNOLOGY ADVANCES, ELSEVIER PUBLISHING, BARKING, GB, vol. 23, no. 3, 1 May 2005 (2005-05-01), pages 203-259, XP027719397, ISSN: 0734-9750 [retrieved on 2005-05-01]**
• **WANG A ET AL: "Mammalian lysophospholipases", BIOCHIMICA AND BIOPHYSICA ACTA. MOLECULAR AND CELL BIOLOGY OF LIPIDS, ELSEVIER, AMSTERDAM, NL, vol. 1439, no. 1, 9 July 1999 (1999-07-09), pages 1-16, XP004277177, ISSN: 1388-1981, DOI: 10.1016/S1388-1981(99)00063-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Reference to a sequence listing**

This application contains a Sequence Listing in computer readable form, which is incorporated herein by reference.

**Background of the invention**

**Field of the invention**

The present invention relates to methods of baking sponge cake using polypeptides having lysophospholipase activity. The invention relates to a process for producing a sponge cake, the process comprising preparing a batter from ingredients comprising flour, egg, sugar, an enzyme having lysophospholipase activity and an enzyme having maltogenic alpha-amylase activity.

**Description of the related art**

Sponge cake is a cake based on flour (usually wheat flour), sugar, and eggs. The only fat present is usually from the egg yolk.

Sponge cakes are the basis for making many cake types and hence represent a large and important segment of the world cake market. They are compositionally and structurally different from the other major group of cakes, pound cakes, in that they do not contain oil (or typically do not) and have a springy (elastic), firm, yet well aerated structure.

When eaten, fresh sponge cakes have a soft bite and a crumb that is moist, smooth and easily melts in the mouth and does not require excessive chewing before it is ready for swallowing. Sponge cakes are unlike for example pound cakes typically not consumed on their own and they rather serve as the basis for making other types of cakes by for example spreading jams or creams between sponge layers and decorating the top layer with a frosting as is the case of a celebration cake. Hence, good resistance to handling and cutting and against surface tearing to make possible slicing/cutting of sponge layers and spreading of creams and jams, are all desired characteristics of sponge cakes. However, because of their highly aerated structure, sponge cakes are delicate and fragile and hence they are prone to exhibit poor resistance to handling, slicing, spreading and against other stresses.

Numerous cake emulsifiers exist which can improve air incorporation in the batter, batter stability in the oven, crumb surface texture (size and uniformity of gas pores) and crumb softness, and crumb eating properties.

Enzymes, such as porcine pancreatic phospholipase A2 enzyme, have also been used to improve batter and cake characteristics. The phospholipase A2 creates lysophospholipids which act as emulsifiers in the batter. Lysophospholipids are naturally present in egg-yolk. As the addition of phospholipase A2 enzymes creates lysophospholipids these enzymes have been used in cake batter to enable reduction in the amount of egg used (WO 2008/092907).

A lysophospholipase from *Aspergillus niger* is disclosed in WO 2001/027251.

WO 2009/106575 discloses lipases with high specificity towards short chain fatty acids and uses thereof.

WO 2008/092907 discloses the use of a phospholipase A in the production of cake.

**Summary of the invention**

The inventors of the present invention have now found that in the preparation of sponge cakes using porcine pancreatic phospholipase A2 enzyme certain detrimental effects may be observed including reduced cohesiveness and increased hardness of the sponge cake. The reduced cohesiveness and increased hardness are related to staling of the sponge cake. The inventors of the present invention have further found these detrimental effects can be avoided or reduced by replacing the phospholipase A2 enzyme with an enzyme having lysophospholipase activity. Sponge cake prepared with lysophospholipase have increased cohesiveness and reduced hardness relative to a sponge cake prepared with porcine pancreatic phospholipase A2. This is surprising finding as lysophospholipases act by hydrolyzing lysophospholipids, the very same compounds that are believed to act as beneficial emulsifiers in the batter. The skilled person would therefore not expect an advantageous effect from applying a lysophospholipase in a batter for sponge cake.

Accordingly, the invention provides a process for producing a sponge cake, the process comprising preparing a batter from ingredients comprising flour, egg, sugar, an enzyme having lysophospholipase activity and an enzyme having maltogenic alpha-amylase activity, and baking or steaming the batter to produce the sponge cake, wherein the lysophospholipase has at least 70% sequence identity to the mature polypeptide of SEQ ID NO:1.

**Definitions**

**Lysophospholipase activity:** Lysophospholipase activity (EC 3.1.1.5) *i.e.* hydrolytic activity that can hydrolyze lysophospholipids to release free fatty acid.

**Phospholipase activity:** Phospholipase activity (A1 or A2, EC 3.1.1.32 or 3.1.1.4), i.e. hydrolytic activity towards one or both carboxylic ester bonds in phospholipids such as lecithin.

**Lipase activity:** Triacylglycerol lipase activity (EC 3.1.1.3), *i.e.* hydrolytic activity for carboxylic ester bonds in triglycerides, *e.g.,* olive oil and tributyrin.

**Fragment:** The term "fragment" means a polypeptide having one or more (*e.g.,* several) amino acids absent from the amino and/or carboxyl terminus of a mature polypeptide or domain; wherein the fragment has lysophospholipase activity activity.

**Host cell:** The term "host cell" means any cell type that is susceptible to transformation, transfection, transduction, or the like with a nucleic acid construct or expression vector comprising a polynucleotide of the present invention. The term "host cell" encompasses any progeny of a parent cell that is not identical to the parent cell due to mutations that occur during replication.

**Isolated:** The term "isolated" means a substance in a form or environment that does not occur in nature. Non-limiting examples of isolated substances include (1) any non-naturally occurring substance, (2) any substance including, but not limited to, any enzyme, variant, nucleic acid, protein, peptide or cofactor, that is at least partially removed from one or more or all of the naturally occurring constituents with which it is associated in nature; (3) any substance modified by the hand of man relative to that substance found in nature; or (4) any substance modified by increasing the amount of the substance relative to other components with which it is naturally associated (*e.g*., multiple copies of a gene encoding the substance; use of a stronger promoter than the promoter naturally associated with the gene encoding the substance). An isolated substance may be present in a fermentation broth sample.

**Mature polypeptide:** The term "mature polypeptide" means a polypeptide in its final form following translation and any post-translational modifications, such as N-terminal processing, C-terminal truncation, glycosylation, phosphorylation, etc. In one aspect, the mature polypeptide is amino acids 1 to 601 of SEQ ID NO: 1. Amino acids -37 to -1 of SEQ ID NO: 1 is a signal peptide.

**Sequence identity:** The relatedness between two amino acid sequences or between two nucleotide sequences is described by the parameter "sequence identity". For purposes of the present invention, the sequence identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 5.0.0 or later. The parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows:

$$\text{(Identical Residues x 100)/(Length of Alignment – Total Number of Gaps in Alignment)}$$

**Sponge cakes:** A sponge cake is a cake prepared from a foamed batter based on flour (usually wheat flour), sugar, and eggs. Other ingredients may be present including starch (usually wheat starch), water, milk, (or milk-derived products), and emulsifier. A sponge cake batter generally does not contain shortening or oil. The main part of the fat present is usually from the egg yolk, which may be added separately from the white. A sponge cake is leavened, usually with baking powder or yeast. The crumb structure of sponge cake is characterized by an open and soft surface texture, composed of fine and uniform pores and the cake has a firm, springy, and highly aerated structure. Sponge cakes are typically not consumed on their own but rather serve as the basis for making other types of cakes *e.g.,* celebration cakes, layer cakes, charlottes, jelly rolls, Swiss rolls, roulade, pionono, and genoise, by for example spreading jams or creams on or between sponge layers and/or decorating the top layer with a frosting.

**Improved property:** When the polypeptide is incorporated into a batter in effective amounts one or more properties of the batter or of the baked product, *i.e.* the sponge cake, obtained there from may be improved relative to a batter or a sponge cake in which the polypeptide is not incorporated. The term "improved property" is defined herein as any property of a batter and/or a sponge cake obtained from the batter, which is improved by the action of the lysophospholipase according to the invention or by the baking composition according to the invention relative to a batter or sponge cake in which the lysophospholipase or composition according to the invention is not incorporated. The improved property may include, but is not limited to reduced batter specific gravity (i.e. increased air incorporation), increased volume of the baked product, improved flavor of the baked product, improved crumb structure of the baked product, improved crumb softness of the baked product, improved cohesiveness of the baked product, reduced hardness of the baked product, improved eating properties of the baked product and/or improved anti-staling of the baked product.

The improved property may be determined by comparison of a batter and/or a baked product prepared with and without addition of the lysophospholipase or of the baking composition of the present invention in accordance with the methods known in the art, including the methods which are described below. Sensory qualities, such as eating properties, may be evaluated using procedures well established in the baking industry, and may include, for example, the use of a panel of trained evaluators.

The term "improved anti-staling" is defined herein as a reduced rate of deterioration of quality parameters during storage. Improved anti-staling of sponge cakes resulting from the addition of lysophospholipase includes increased cohesiveness and/or reduced hardness and/or improved eating properties following storage relative to a control prepared with no addition of lysophospholipase. The term "eating properties" include sensory parameters such as tenderness, softness, cake mouthfeel, gumminess, chewiness, moistness and smoothness scores.

**Detailed description of the invention**

The invention provides a process for preparing a sponge cake prepared from a batter, the process comprising incorporating into the batter an enzyme having lysophospholipase activity (EC 3.1.1.5). Incorporating into the batter the enzyme having lysophospholipase activity may result in a batter having an improved property selected from the group consisting of decreased specific gravity, and increased specific volume. Furthermore, incorporating into the batter the enzyme having lysophospholipase activity may result in a sponge cake having an improved property selected from the group consisting of increased cohesiveness, reduced hardness, and improved eating properties.

**Polypeptides having lysophospholipase activity**

Polypeptides having lysophospholipase activity, *i.e.* enzymes having lysophospholipase activity, which are suitable for use in the present invention include polypeptide selected from the group consisting of;

(a) a polypeptide having an amino acid sequence which has at least 70% sequence identity to the mature polypeptide of SEQ ID NO: 1;
(b) a variant of the mature polypeptide of SEQ ID NO: 1 comprising a substitution, deletion, and/or insertion at one or more (*e.g.,* several) positions; and
(c) a fragment of the polypeptide of (a), or (b) that has lysophospholipase activity.

More preferred polypeptides having lysophospholipase activity which are suitable for use in the present invention include polypeptides having an amino acid sequence which has at least 75%, at least 80%, at least 85%, at least 90%, at least 95%, at least 96%, at least 97%, at least 98%, at least 99%, at least 99.5%, or even at least 100 %sequence identity to the mature polypeptide of SEQ ID NO: 1. The mature polypeptide of SEQ ID NO: 1 is identical to the mature polypeptide of SEQ ID NO: 4 in WO 2001/24251.

In another aspect, the polypeptide comprises or consists of the polypeptide of SEQ ID NO: 1; or the mature polypeptide of SEQ ID NO: 1.

Other polypeptides having lysophospholipase activity which may be applied in the present invention include the *Aspergilli* lysophospholipases disclosed as SEQ ID NO: 2, 4, 6 and 8 in WO 2001/27251, the lysophospholipase from *Fusarium venenatum* disclosed as SEQ ID NO: 16 of US2003/00100092 and the lysophospholipase disclosed in WO9831790.

Any polypeptides having lysophospholipase activity identified herein or a fragment thereof may be used to design nucleic acid probes to identify and clone DNA encoding further polypeptides having lysophospholipase activity from strains of different genera or species according to methods well known in the art (Sambrook *et al.,* 1989, *Molecular Cloning*, *A Laboratory Manual*, 2nd edition, Cold Spring Harbor, New York). In particular, such probes can be used for hybridization with the genomic DNA or cDNA of a cell of interest, following standard Southern blotting procedures, in order to identify and isolate the corresponding gene therein. Such probes can be considerably shorter than the entire sequence, but should be at least 15, e.g., at least 25, at least 35, or at least 70 nucleotides in length. Preferably, the nucleic acid probe is at least 100 nucleotides in length, *e.g.,* at least 200 nucleotides, at least 300 nucleotides, at least 400 nucleotides, at least 500 nucleotides, at least 600 nucleotides, at least 700 nucleotides, at least 800 nucleotides, or at least 900 nucleotides in length. Both DNA and RNA probes can be used. The probes are typically labeled for detecting the corresponding gene (for example, with $^{32}$P, $^{3}$H, $^{35}$S, biotin, or avidin).

A genomic DNA or cDNA library prepared from such other strains may be screened for DNA that hybridizes with the probes described above and encodes a polypeptide having lysophospholipase activity. Genomic or other DNA from such other strains may be separated by agarose or polyacrylamide gel electrophoresis, or other separation techniques. DNA from the libraries or the separated DNA may be transferred to and immobilized on nitrocellulose or other suitable carrier material. In order to identify a clone or DNA that hybridizes with SEQ ID NO: 1 or a subsequence thereof, the carrier material is used in a Southern blot.

In another embodiment, the lysophospholipase suitable for use in the present invention is a variant of the mature polypeptide of SEQ ID NO: 1 comprising a substitution, deletion, and/or insertion at one or more (*e.g.,* several) positions. In an embodiment, the number of amino acid substitutions, deletions and/or insertions introduced into the mature polypeptide of SEQ ID NO: 1 is not more than 10, *e.g.,* 1, 2, 3, 4, 5, 6, 7, 8, 9 or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function, such as a poly-histidine tract, an antigenic epitope or a binding domain.

Examples of conservative substitutions are within the groups of basic amino acids (arginine, lysine and histidine), acidic amino acids (glutamic acid and aspartic acid), polar amino acids (glutamine and asparagine), hydrophobic amino acids (leucine, isoleucine and valine), aromatic amino acids (phenylalanine, tryptophan and tyrosine), and small amino acids (glycine, alanine, serine, threonine and methionine). Amino acid substitutions that do not generally alter specific activity are known in the art and are described, for example, by H. Neurath and R.L. Hill, 1979, In, The Proteins, Academic Press, New York. Common substitutions are Ala/Ser, Val/Ile, Asp/Glu, Thr/Ser, Ala/Gly, Ala/Thr, Ser/Asn, Ala/Val, Ser/Gly, Tyr/Phe, Ala/Pro, Lys/Arg, Asp/Asn, Leu/Ile, Leu/Val, Ala/Glu, and Asp/Gly.

Single or multiple amino acid substitutions, deletions, and/or insertions can be made and tested using known methods of mutagenesis, recombination, and/or shuffling, followed by a relevant screening procedure, such as those disclosed by Reidhaar-Olson and Sauer, 1988, Science 241: 53-57; Bowie and Sauer, 1989, Proc. Natl. Acad. Sci. USA 86: 2152-2156; WO 1995/17413; or WO 1995/22625. Other methods that can be used include error-prone PCR, phage display (*e.g.,* Lowman et al., 1991, Biochemistry 30: 10832-10837; U.S. Patent No. 5,223,409; WO 1992/06204), and region-directed mutagenesis (Derbyshire et al., 1986, Gene 46: 145; Ner et al., 1988, DNA 7: 127).

**Sources of polypeptides having lysophospholipase activity**

A polypeptide having lysophospholipase activity may be obtained from a number of sources, including plant, animal, bacterial, fungal or environmental sources.

The polypeptide may be a fungal polypeptide. For example, the polypeptide may be a yeast polypeptide such as a *Candida, Kluyveromyces, Pichia, Saccharomyces, Schizosaccharomyces,* or *Yarrowia* polypeptide; or a filamentous fungal polypeptide such as an *Acremonium, Agaricus, Alternaria, Aspergillus, Aureobasidium, Botryospaeria, Ceriporiopsis, Chaetomidium, Chrysosporium, Claviceps, Cochliobolus, Coprinopsis, Coptotermes, Corynascus, Cryphonectria, Cryptococcus, Diplodia, Exidia, Filibasidium, Fusarium, Gibberella, Holomastigotoides, Humicola, Irpex, Lentinula, Leptospaeria, Magnaporthe, Melanocarpus, Meripilus, Mucor, Myceliophthora, Neocallimastix, Neurospora, Paecilomyces, Penicillium, Phanerochaete, Piromyces, Poitrasia, Pseudoplectania, Pseudotrichonympha, Rhizomucor, Schizophyllum, Scytalidium, Talaromyces, Thermoascus, Thielavia, Tolypocladium, Trichoderma, Trichophaea, Verticillium, Volvariella,* or *Xylaria* polypeptide.

In another aspect, the polypeptide is an *Acremonium cellulolyticus, Aspergillus aculeatus, Aspergillus awamori, Aspergillus foetidus, Aspergillus fumigatus, Aspergillus japonicus, Aspergillus nidulans, Aspergillus niger, Aspergillus oryzae, Aspergillus aculeatus Chrysosporium inops, Chrysosporium keratinophilum, Chrysosporium lucknowense, Chrysosporium merdarium, Chrysosporium pannicola, Chrysosporium queenslandicum, Chrysosporium tropicum, Chrysosporium zonatum, Fusarium bactridioides, Fusarium cerealis, Fusarium crookwellense, Fusarium culmorum, Fusarium graminearum, Fusarium graminum, Fusarium heterosporum, Fusarium negundi, Fusarium oxysporum, Fusarium reticulatum, Fusarium roseum, Fusarium sambucinum, Fusarium sarcochroum, Fusarium sporotrichioides, Fusarium sulphureum, Fusarium torulosum, Fusarium trichothecioides, Fusarium venenatum, Humicola grisea, Humicola insolens, Humicola lanuginosa, Irpex lacteus, Mucor miehei, Myceliophthora thermophila, Neurospora crassa, Penicillium funiculosum, Penicillium purpurogenum, Phanerochaete chrysosporium, Thielavia achromatica, Thielavia albomyces, Thielavia albopilosa, Thielavia australeinsis, Thielavia fimeti, Thielavia microspora, Thielavia ovispora, Thielavia peruviana, Thielavia setosa, Thielavia spededonium, Thielavia subthermophila, Thielavia terrestris, Trichoderma harzianum, Trichoderma koningii, Trichoderma longibrachiatum, Trichoderma reesei,* or *Trichoderma viride* polypeptide.

It will be understood that for the aforementioned species, the invention encompasses both the perfect and imperfect states, and other taxonomic equivalents, *e.g.,* anamorphs, regardless of the species name by which they are known. Those skilled in the art will readily recognize the identity of appropriate equivalents.

Strains of these species are readily accessible to the public in a number of culture collections, such as the American Type Culture Collection (ATCC), Deutsche Sammlung von Mikroorganismen und Zellkulturen GmbH (DSMZ), Centraalbureau Voor Schimmelcultures (CBS), and Agricultural Research Service Patent Culture Collection, Northern Regional Research Center (NRRL).

The polypeptide may be identified and obtained from environmental sources including microorganisms isolated from nature (e.g., soil, composts, water, etc.) or DNA samples obtained directly from natural materials (*e.g.,* soil, composts, water, etc.) using the above-mentioned probes. Techniques for isolating microorganisms and DNA directly from natural habitats are well known in the art. A polynucleotide encoding the polypeptide may then be obtained by similarly screening a genomic DNA or cDNA library of another microorganism or mixed DNA sample. Once a polynucleotide encoding a polypeptide has been detected with the probe(s), the polynucleotide can be isolated or cloned by utilizing techniques that are known to those of ordinary skill in the art (see, *e.g.,* Sambrook *et al.,* 1989, *supra*).

**The additional enzymes**

Optionally, one or more additional enzymes may be used together with the lysophospholipase in preparing batter and sponge cake. The additional enzymes include amylase, glucanase, galactanase, mannanase, aminopeptidase, alpha-amylase, maltogenic alpha-amylase, beta-amylase, carboxypeptidase, catalase, chitinase, cutinase, cyclodextrin glycosyltransferase, deoxyribonuclease, esterase, alpha-galactosidase, beta-galactosidase, glucoamylase, alpha-glucosidase, beta-glucosidase, hemicellulase, haloperoxidase, invertase, laccase, lipase, phospholipase, mannosidase, oxidase, pectinolytic enzymes, peptidoglutaminase, peroxidase, phytase, glucose oxidase, polyphenoloxidase, proteolytic enzyme, ribonuclease, and transglutaminasemay. The additional enzyme may be of any origin, including mammalian and plant, and preferably of microbial (bacterial, yeast or fungal) origin.

Glucoamylases suitable for use in the present invention include glucoamylases having a sequence identity of at least 50%, at least 60%, at least 65%, at least 70%, at least 75%, at least 80%, at least 85%, at least 90%, at least 95%, at least 96%, at least 97%, at least 98%, or at least 99% to the amino acid sequence of the *A. niger* G1 or G2 glucoamylase (Boel et al. (1984), EMBO J. 3 (5), p. 1097-1102), the *A. awamori* glucoamylase disclosed in WO 1984/02921, or the *A. oryzae* glucoamylase (Agric. Biol. Chem. (1991), 55 (4), p. 941-949).

The amylase may be fungal or bacterial, *e.g.,* a maltogenic alpha-amylase from B. *stearothermophilus* or an alpha-amylase from *Bacillus, e.g., B. licheniformis* or *B. amyloliquefaciens,* an a beta-amylase, *e.g.,* from plant (*e.g.,* soy bean) or from microbial sources (*e.g., Bacillus*), a glucoamylase, *e.g.,* from *A. niger,* or a fungal alpha-amylase, *e.g.,* from *A. oryzae.*

Suitable maltogenic alpha-amylases include the maltogenic alpha-amylase shown in SEQ ID NO: 3 herein as well as maltogenic alpha-amylases having a sequence identity of at least 50%, at least 60%, at least 65%, at least 70%, at least 75%, at least 80%, at least 85%, at least 90%, at least 95%, at least 96%, at least 97%, at least 98%, or at least 99% thereto.

Suitable commercial maltogenic alpha-amylases include NOVAMYL® (Novozymes A/S) and OPTICAKE® (Novozymes A/S). Suitable commercial fungal alpha-amylase compositions include, *e.g.*, BAKEZYME® P 300 (available from DSM) and FUNGAMYL® 2500 SG, FUNGAMYL® 4000 BG, FUNGAMYL® 800 L, FUNGAMYL® ULTRA BG and FUNGAMYL® ULTRA SG (available from Novozymes A/S).

The amylase may be a non-maltogenic exo-amylase (glucan 1,4-alpha-maltotetrahydrolase (EC 3.2.1.60)), *e.g.,* one derived from *Pseudomonas saccharophilia* and variants thereof such as disclosed in WO 1999/050399, WO 2004/111217 and WO 2005/003339.

Suitable commercial non-maltogenic exo-amylases include POWERFRESH® G4 and POWERFRESH® G+.

The glucose oxidase may be a fungal glucose oxidase, in particular an *Aspergillus niger* glucose oxidase (such as GLUZYME®, available from Novo Nordisk A/S, Denmark).

The hemicellulase may be a pentosanase, *e.g.,* a xylanase which may be of microbial origin, e.g., derived from a bacterium or fungus, such as a strain of *Aspergillus,* in particular of A. aculeatus, A. niger, *A. awamori,* or *A. tubigensis,* from a strain of *Trichoderma*, *e.g., T. reesei,* or from a strain of *Humicola, e.g., H. insolens.*

Suitable commercially available xylanase preparations for use in the present invention include PENTOPAN® MONO BG, PENTOPAN® 500 BG and PANZEA® (available from Novozymes), GRINDAMYL® POWERBAKE (available from Danisco), and BAKEZYME® BXP 5000 and BAKEZYME® BXP 5001 (available from DSM).

The protease may be from *Bacillus, e.g., B. amyloliquefaciens.*

The phospholipase may have phospholipase A1, A2, B, C, or D activity; it may or may not have lipase activity and it may or may not have galactolipase activity. It may be of animal origin, *e.g.,* from pancreas, snake venom or bee venom, or it may be of microbial origin, e.g., from filamentous fungi, yeast or bacteria, such as *Aspergillus or Fusarium, e.g., A. niger, A. oryzae* or *F. oxysporum.* A lipase/phospholipase from *Fusarium oxysporum* is disclosed in WO 1998/26057. Also, the variants described in WO 2000/32758 may be used. A porcine pancreatic phospholipase A2 is shown in SEQ ID NO: 2 herein.

Suitable phospholipase A2 compositions are LIPOPAN® F and LIPOPAN® XTRA (available from Novozymes) or PANAMORE® GOLDEN and PANAMORE® SPRING (available from DSM).

The additional enzyme may be of any origin, including mammalian and plant, and preferably of microbial (bacterial, yeast or fungal) origin and may be obtained by techniques conventionally used in the art.

**Compositions comprising a lysophospholipase**

Described are compositions comprising a lysophospholipase and their preparation, *e.g.,* compositions suitable for preparation of a sponge cake.

The composition may further comprise one or more additional enzymes. Most preferably the one or more additional enzymes include a maltogenic alpha-amylase.

The compositions may be prepared in accordance with methods known in the art and may have any physical appearance such as liquid, paste or solid. For instance, the composition may be formulated using methods known to the art of formulating enzymes and/or pharmaceutical products, *e.g.,* into coated or uncoated granules or micro-granules. The lysophospholipase, and any additional enzymes to be included in the composition may be stabilized in accordance with methods known in the art *e.g.,* by stabilizing the polypeptide in the composition by adding an antioxidant or reducing agent to limit oxidation or the polypeptide of it may be stabilized by adding polymers such as PVP, PVA, PEG or other suitable polymers known to be beneficial to the stability of polypeptides in solid or liquid compositions. When formulating a lysophospholipase, as a granulate or agglomerated powder the particles particularly have a narrow particle size distribution with more than 95% (by weight) of the particles in the range from 25 to 500 $\mu$m. Granulates and agglomerated powders may be prepared by conventional methods, *e.g.,* by spraying a lysophospholipase, onto a carrier in a fluid-bed granulator. The carrier may consist of particulate cores having a suitable particle size. The carrier may be soluble or insoluble, *e.g.,* a salt (such as NaCl or sodium sulfate), a sugar (such as sucrose or lactose), a sugar alcohol (such as sorbitol), starch, rice, corn grits, or soy. The composition is preferably in the form of a dry powder or a granulate, in particular a non-dusting granulate or an agglomerated powder. Hence the invention also provides a granule comprising a lysophospholipase. The granule may further comprise one or more additional enzymes. Most preferably the one or more additional enzymes include a maltogenic alpha-amylase.

In a particular disclosure the composition is a batter composition or a batter improving additive or a premix comprising a lysophospholipase and optionally one or more additional enzymes. Most preferably the one or more additional enzymes include a maltogenic alpha-amylase.

The term "pre-mix" is defined herein to be understood in its conventional meaning, *i.e.,* as a mix of baking agents, generally including flour, which may be used not only in industrial baking plants, but also in retail bakeries.

The pre-mix may be prepared by mixing the baking composition of the invention with a suitable carrier such as flour, starch, a sugar, a complex carbohydrate such as maltodextrin, or a salt. The pre-mix may contain other baking additives, *e.g.,* any of the additives, including enzymes, mentioned herein.

The amount of the lysophospholipase in the composition may be between 0.5-50000 mg polypeptide per kg dry matter, 1.0-10000 mg polypeptide per kg dry matter, 5.0-1000 mg polypeptide per kg dry matter, 5.0-500 mg polypeptide per kg dry matter, 5.0-250 mg polypeptide per kg dry matter, 5.0-150 mg polypeptide per kg dry matter, or more preferably 5.0-100 mg polypeptide per kg per kg dry matter.

**Batter**

Described is a method for preparing a batter or a baked product prepared from the batter which method comprises incorporating into the batter a lysophospholipase. The batter may further comprise one or more additional enzymes. Most preferably the one or more additional enzymes include a maltogenic alpha-amylase.

In another aspect, described is a batter comprising flour, water, and an effective amount of a baking composition or a premix according to the invention.

Described are methods for preparing a batter or a baked product comprising incorporating into the batter an effective amount of a baking composition of the present invention which improves one or more properties of the batter or the baked product obtained from the batter relative to a batter or a baked product in which the polypeptide is not incorporated.

The phrase "incorporating into the batter" is defined herein as adding the baking composition according to the invention to the batter, to any ingredient from which the batter is to be made, and/or to any mixture of batter ingredients from which the batter is to be made. In other words, the baking composition of the invention may be added in any step of the batter preparation and may be added in one, two or more steps. The composition is added to the ingredients of a batter that is mixed and baked to make the sponge cake using methods well known in the art.

The term "effective amount" is defined herein as an amount of baking composition according to the invention that is sufficient for providing a measurable effect on at least one property of interest of the batter and/or sponge cake.

The term "batter" is defined herein as a mixture of flour, eggs (either whole eggs, egg yolks or egg whites), sugar and other ingredients.

The batter may comprise flour derived from any cereal grain, including wheat, barley, rye, oat, corn, sorghum, rice and millet. Preferably, the batter comprises wheat flour. Part of the flour may be substituted by starch, *e.g.,* a starch fraction derived from cereal grain, root crops, sago palm etc. Preferred is wheat starch.

The batter may also comprise other conventional baking ingredients, *e.g.:* proteins, such as milk powder, gluten, and soy; an oxidant such as ascorbic acid, potassium bromate, potassium iodate, azodicarbonamide (ADA) or ammonium persulfate; an amino acid such as L-cysteine; a salt such as sodium chloride, calcium acetate, sodium sulfate or calcium sulfate, other conventional ingredients such as humectants, gums, flavor extracts and spices.

The batter may comprise fat (triglyceride) such as granulated fat or shortening, but the invention is particularly applicable to a batter where less than 1% by weight of fat is added, and particularly to a batter which is made without addition of fat. Although no fat is added some fat will be present due to the natural fat content of the added egg, but also from the natural fat content of the flour.

The batter may comprise an emulsifier, preferably an emulsifier selected from the group consisting of polyglycerol esters of fatty acid, mono- and diglycerides of fatty acid, acetic acid esters of mono- and diglycerides of fatty acids, lactic acid esters of mono- and di-glycerides, diacetyl tartaric acid esters of monoglycerides (DATEM), sodium stearoyl lactylate (SSL), calcium stearoyl lactylate (CSL), ethoxylated mono- and diglycerides (EMG), polysorbates (PS), succinylated monoglycerides (SMG) and mixtures thereof.

The batter is a leavened batter or a batter to be subjected to leavening. The batter may be leavened in various ways, such as by adding chemical leavening agents, *e.g.,* baking powder (comprising an acidulant, such as sodium acid pyrophosphate, sodium aluminium phosphate and/or monocalcium phosphate, and a source of carbon dioxide, such as sodium bicarbonate).

The term "sugar" is used in the sense of sucrose, as derived principally from sugar cane and sugar beets, sugar palm, sugar maple, sorghum and the like, or dextrose (corn sugar). If present, glucose, galactose, fructose and maltose also add to the sugar content.

The amount of lysophospholipase in the batter may be between 0.01-100 mg polypeptide per kg flour in the batter, in particular 0.05-50 mg polypeptide per kg flour, in particular 0.1-25 mg polypeptide per kg flour, in particular 0.1-15 mg polypeptide per kg flour in the batter, in particular 0.1 to 0.5 mg polypeptide per kg flour, such as *e.g.,* 0.3 mg polypeptide per kg flour.

The batter is heat treated, *e.g.,* by baking or steaming, to prepare the sponge cake. A suitable baking temperature may be in the range of 175-225°C, preferably 185-215°C, and more preferably 190-210°C. A suitable baking time may be in the range of 20-30 minutes, preferably in the range of 23-27 minutes and more preferably around 25 minutes.

The present invention is further described by the following examples.

## Materials and methods

**Lipolytic Activity (LU):** The lipolytic activity may be determined using tributyrine as substrate. This method is based on the hydrolysis of tributyrin by the enzyme, and the alkali consumption to keep pH constant during hydrolysis is registered as a function of time.

One Lipase Unit (LU) is defined as the amount of enzyme which, under standard conditions (*i.e.* at 30°C; pH 7.0; with 0.1 % w/v Gum Arabic as emulsifier and 0.16 M tributyrine as substrate) liberates 1 micromol titrable butyric acid per minute.

**Phospholipase activity (LEU):** The activity of phospholipase A2 may be expressed in LEU. In the LEU assay, the phospholipase activity is determined from the ability to hydrolyze lecithin at pH 8.0, 40°C. The hydrolysis reaction can be followed by titration with NaOH for a reaction time of 2 minutes. The phospholipase A2 from porcine pancreas has an activity of 510 LEU/mg (taken as standard).

**Phospholipase activity (EYU):** The activity of phospholipase A2 may be expressed in so-called Egg Yolk Units (EYU). The EYU assay is disclosed by Nieuwenhuizen et al (Methods in Enzymology, Vol 32, 1974, 147-154).

## Lysophospholipase activity (LLU)

Lysophospholipase activity may be measured using egg yolk L-α-lysolecithin as the substrate. The released free fatty acids may be quantified using a suitable enzymatic, colorimetric kit, *e.g.,* the Wako NEFA-HR(2). 20 μl of sample is mixed with 100 μl of 20 mM sodium acetate buffer (pH 4.5) and 100 μl of 1% L-α-lysolecithin solution, and incubated at 55°C for 20 min. After 20 min, the reaction mixture is transferred to the tube containing 30 μl of Solution A in NEFA kit preheated at 37°C. After 10 min incubation at 37°C, 600 μl of Solution B in NEFA kit is added to the reaction mixture and incubated at 37°C for 10 min. Activity is measured at 555 nm on a spectrophotometer. One unit of lysophospholipase activity (1 LLU) is defined as the amount of enzyme that can increase the A550 of 0.01 per minute at 55°C.

**Maltogenic alpha-amylase activity**

One MANU (Maltogenic Amylase Novo Unit) may be defined as the amount of enzyme required to release one micromol of maltose per minute at a concentration of 10 mg of maltotriose (Sigma M 8378) substrate per ml of 0.1 M citrate buffer, pH 5.0 at 37 °C for 30 minutes.

**Specific gravity of the batter** is calculated from the ratio of the batter density to the density of the water at the same temperature. Batter density is calculated by dividing the weight in grams by a known volume in cubic centimeters of batter (g/ml or g/cc).

**Viscosity of the batter** is measured using the method described by Bettge A.D. and Morris C.F. (2007) (Cereal Chemistry, 84, 237-242) except that batter flow distance was measured after 2 min.

**Volume of the cakes** is determined using the laser-based BVM-L370/450 (LC) volume measurement instrument (TexVol Instruments AB, Viken, Sweden). The specific volume of the cakes is calculated by dividing the volume in cubic centimeters by the weight in grams (ml/g or cc/g). The cakes are packed under nitrogen in sealed plastic bags and stored at room temperature until analysis.

**Cohesiveness** and **hardness** of the cakes are determined by instrumental texture evaluation. The cohesiveness and hardness of the cakes are determined with an instrumental texture analyzer (TA-XT2, Texture Technologies, Scarsdale, NY) using the texture profile analysis protocol. Cohesiveness and hardness measurements represent the average of 12 instrumental texture measurements, six measurements per sponge cake replicate. The texture profile analysis (TPA) was performed as described in Bourne M. C. (2002) 2nd edition, Food Texture and Viscosity: Concept and Measurement. Academic Press.

**Sensory evaluation** is conducted in blind by trained evaluators using a 9-point scale whereby a score of 5 corresponds to the sensory attributes of the cake without enzyme at any given date. Higher scores denote improved sensory attributes and lower scores inferior sensory attributes. The evaluators examine and score by touch the tenderness (by pressing the cake with the fingers) and the crumbliness (by rubbing back and forth a cut cake cross-section) of the cakes. The eating properties of the cakes in the mouth are also examined and scored in terms of cake softness (resistance to first bite) and in terms of mouthfeel, gumminess, moistness, chewiness and smoothness, according to the guidelines set out by Watts B.M., Ylimaki G.L., Jeffery L.E., and Elias L.G. (1989), 1st Edition, Basic Sensory Methods for Food Evaluation. International Development Research Center, Ottawa, Canada.

**Enzymes**

**Lysophospholipase:** A enzyme preparation comprising an polypeptide having lysophospholipase activity (LPL) and having the sequence shown as amino acids 1-601 in SEQ ID NO: 1. The enzyme is derived from *Aspergillus niger* and expressed in *A. niger.* The enzyme preparation has a lysophospholipase activity of 50 LLU/g.

**Phospholipase A2:** A commercial enzyme preparation comprising an enzyme having phospholipase A2 activity and having the sequence shown as amino acids 1-601 of in SEQ ID NO: 2 (PLA2). The enzyme is derived from porcine pancreas and expressed in *A. niger.* The enzyme preparation has a declared phospholipase activity of 5000 EYU/g.

**Maltogenic alpha-amylase:** A commercial enzyme preparation comprising a maltogenic alpha-amylase variant having the sequence shown in SEQ ID NO: 3 with 4 substitutions; F194Y, D261G, T288P and N375S. The enzyme preparation has a maltogenic alpha-amylase activity of 5000 MANU/g.

**EXAMPLES**

**Example 1**

Sponge cakes were prepared without added enzyme (control), with addition of a lysosphospholipase (LPL), and with addition of a commercial porcine pancreatic phospholipase A2 (PLA2). The following recipe was used.

| Ingredients in % of flour+starch | |
| --- | --- |
| Eggs | 75 |
| Water | 50 |
| Sugar | 87.5 |
| Salt | 0.75 |
| Flour (wheat four/wheat starch 350/50) | 100 |
| Baking powder | 2.5 |
| Emulsifier (Jilk) | 4 |
| Enzyme preparation | Acc. to trial |

The ingredients were mixed using an industrial mixer. Portions of 300 g of the batter were poured into forms, baked for 24 min. at 200°C and allowed to cool down at room temperature for 2 hours.

The cakes were evaluated on days 1, 7 and 14 using instrumental texture evaluation and sensory evaluation.

Compared to batter with no addition of enzymes, the specific gravity of the batter decreased by the addition of LPL indicating increased air incorporation in the batter. Compared to cake batter with no addition of enzymes, batter specific gravity was not affected by the addition of PLA2.

The enzymes had no significant effect on either the viscosity of the batter or on the volume of the cakes.

Table 1: Change in batter specific gravity[1] [dimensionless], batter viscosity[1] [displacement in cm] and cake specific volume[1] [ml/g] with 500 mg of enzymes preparation per kg flour+starch.

| Enzyme | Batter specific gravity | Batter viscosity | Cake specific volume |
|---|---|---|---|
| No enzyme | 0.461a | 2.3a | 5.0a |
| LPL | 0.448b | 2.1a | 5.1a |
| PLA2 | 0.464a | 2.9a | 5.1a |
| LSD[2] | 0.012 | 1.3 | 0.1 |

[1] Values in the same column followed by different letters are statistically different using Fisher's LSD test at a level of significance of 5%. [2] LSD = least significant difference.

The cohesiveness of the cakes decreased with storage time shown in Table 2. The addition of PLA2 caused a further decrease in cake cohesiveness, compared to cakes with no addition of enzymes. In contrast the addition of LPL did not affect this decrease.

Table 2: Change in Cohesiveness[1] [g-force/g-force] with storage time of sponge cakes with 500 mg of enzymes preparation per kg flour+starch.

| Enzyme | Day 1 | Day 7 | Day 14 |
|---|---|---|---|
| No enzyme | 0.77b | 0.66b | 0.58b |
| LPL | 0.76b | 0.64b | 0.59b |
| PLA2 | 0.71a | 0.57a | 0.52a |
| LSD[2] | 0.02 | 0.03 | 0.04 |

[1] Values in the same column followed by different letters are statistically different using Fisher's LSD test at a level of significance of 5%. [2] LSD = least significant difference.

The hardness of the cakes increased with storage time. The addition of PLA2 caused a further increase in cake hardness of day 1, compared to cakes with no addition of enzymes. In contrast the addition of LPL did not affect this increase as shown in Table 3.

Table 3: Change in Hardness[1] [g-force] with storage time of sponge cakes with 500 mg of enzymes preparation per kg flour+starch..

| Enzyme | Day 1 | Day 7 | Day 14 |
|---|---|---|---|
| No enzyme | 233a | 472b | 537a |
| LPL | 218a | 397a | 494a |
| PLA2 | 277b | 465b | 560a |
| LSD[2] | 31 | 54 | 72 |

[1] Values in the same column followed by different letters are statistically different using Fisher's LSD test at a level of significance of 5%. [2] LSD = least significant difference.

In the sensory evaluation the addition of LPL or PLA2 increased cake tenderness scores and improved cake crumbliness scores (crumbliness was lessened) as shown in Table 4. Cake softness scores and cake mouthfeel, gumminess, moistness, chewiness and smoothness scores (compounded scores) also increased upon addition of LPL or PLA2. Overall cake quality scores were significantly improved starting as early as day 1 on addition of LPL or PLA2, compared to cakes with no addition of enzymes.

| Table 4: Change in sensory attributes[1] with storage time of sponge cakes with 500 mg enzyme preparation per kg flour + starch. Nine evaluators. | | | | |
|---|---|---|---|---|
| | No enzyme | LPL | PLA2 | LSD[2] |
| Day 1 | | | | |
| *Touch, tactile properties* | | | | |
| Cake tenderness | 5 | 6 | 5 | |
| Cake crumbliness | 5 | 6 | 5.5 | |
| Cake softness | 5 | 8 | 6.5 | |
| *Eating properties* | | | | |
| Cake mouthfeel, gumminess, moistness, chewiness, smoothness | 5 | 6.5 | 6.5 | |
| Overall cake quality | 5a | 6.6b | 5.9a | 1.5 |
| Day 7 | | | | |
| *Touch, tactile properties* | | | | |
| Cake tenderness | 5 | 6 | 6 | |
| Cake crumbliness | 5 | 4.5 | 4.5 | |
| Cake softness | 5 | 7.5 | 7 | |
| *Eating properties* | | | | |
| Cake mouthfeel, gumminess, moistness, chewiness, smoothness | 5 | 8 | 7 | |
| Overall cake quality | 5.0a | 6.5b | 6.1b | 0.66 |
| Day 14 | | | | |
| *Touch, tactile properties* | | | | |
| Cake tenderness | 5 | 5.5 | 5.5 | |
| Cake crumbliness | 5 | 6 | 6 | |
| Cake softness | 5 | 6 | 6 | |
| *Eating properties* | | | | |
| Cake mouthfeel, gumminess, moistness, chewiness, smoothness | 5 | 6.5 | 6.5 | |
| Overall cake quality | 5a | 6.0b | 6.0b | 0.98 |
| [1] Values in the same raw followed by different letters are statistically different using Fisher's LSD test at a level of significance of significance of 5%. [2] LSD = least significant difference. | | | | |

In the preparation of sponge cakes use both art PLA2 and the LPL significantly improved sensory attributes relative to control. However, in contrast to the prior art PLA2 the LPL did not negatively affect cake cohesiveness and hardness.

## Example 2

Sponge cakes were prepared with addition of a maltogenic alpha-amylase (MAA), addition of a mixture of the maltogenic alpha-amylase (MAA) with a lysosphospholipase (LPL), or addition of a mixture of the maltogenic alpha-amylase (MAA) and a phospholipase A2 (PLA2).

Batter and sponge cake was prepared as in example 1. The cakes were evaluated on day 1, 14 and 21 using sensory evaluation and instrumental texture evaluation.

The enzymes had no significant effect on either the viscosity of the batter or on the volume of the cakes.

Table 5: Change in batter specific gravity[1] [dimensionless] and cake specific volume[1] [ml/g] with 500 mg of enzyme preparations per kg flour+starch.

| Enzyme | Batter specific gravity | Cake specific volume |
|---|---|---|
| 500 mg MAA, Control | 0.485a | 4.9a |
| 500 mg MAA + 500 mg LPL | 0.467a | 5.0a |
| 500 mg MAA + 500 mg PLA2 | 0.483a | 5.1a |
| LSD[2] | 0.021 | 0.21 |

[1] Values in the same column followed by different letters are statistically different using Fisher's LSD test at a level of significance of 5%. [2] LSD = least significant difference.

The cohesiveness of the cakes decreased with storage time as can be seen from table 6. The addition of a mixture of MAA and PLA2 caused a further decrease in cake cohesiveness, compared to cakes prepared with the MAA enzyme only. In contrast the addition of a mixture of MAA and LPL did not affect this decrease relative to a cake to which only MAA has been added.

Table 6: Change in Cohesiveness[1] [g-force/g-force] with storage time of sponge cakes with 500 mg of enzymes per kg flour+starch.

| Enzyme | Day 1 | Day 14 | Day 21 |
|---|---|---|---|
| 500 mg MAA, Control | 0.79b | 0.67b | 0.63b |
| 500 mg MAA + 500 mg LPL | 0.79b | 0.66b | 0.64b |
| 500 mg MAA + 500 mg PLA2 | 0.74a | 0.60a | 0.58a |
| LSD[2] | 0.01 | 0.03 | 0.04 |

[1] Values in the same column followed by different letters are statistically different using Fisher's LSD test at a level of significance of 5%. [2] LSD = least significant difference.

The hardness of the cakes increased with storage time. The addition of the mixture of MAA and LPL did not affect this increase as shown in Table 7. However, the addition of the mixture of MAA and PLA2 causes a further increase in cake hardness of days 1 and 21, compared to cakes with MAA added.

Table 7: Change in Hardness[1] [g-force] with storage time of sponge cakes with 500 mg of enzymes per kg flour+starch.

| Enzyme | Day 1 | Day 14 | Day 21 |
|---|---|---|---|
| 500 mg MAA, Control | 210a | 535a | 608b |
| 500 mg MAA + 500 mg LPL | 201a | 458a | 514a |
| 500 mg MAA + 500 mg PLA2 | 246b | 498a | 553b |
| LSD[2] | 31 | 88 | 77 |

[1] Values in the same column followed by different letters are statistically different using Fisher's LSD test at a level of significance of 5%. [2] LSD = least significant difference.

The texture and eating quality of sponge cake with MAA deteriorated with storage time. Relative to cake to which only MAA had been added (the control), the addition of a mixture of MAA and LPL increased cake tenderness scores as shown in Table 8. Cake softness scores, cake mouthfeel, gumminess, moistness and smoothness scores (compounded scores) and cake chewiness scores also increased upon addition of a mixture of MAA and LPL. Overall cake quality scores increased starting as early as day 1 and for as long as at least 21 days upon addition of a mixture of MAA and LPL, relative to cakes with MAA alone.

| Table 8: Change in sensory attributes[1] with storage time of sponge cakes with 500 mg of enzymes per kg flour + starch. Nine evaluators. | | | | |
|---|---|---|---|---|
| | 500 mg MAA | 500 mg MAA + 500 mg LPL | 500 mg MAA + 500 mg PLA2 | LSD[2] |
| Day 1 | | | | |
| *Touch, tactile properties* | | | | |
| Cake tenderness | 5 | 6 | 6 | |
| Cake softness | 5 | 6.5 | 6.5 | |
| *Eating properties* | | | | |
| Cake mouthfeel, gumminess, moistness, smoothness | 5 | 6.5 | 6.5 | |
| Cake chewiness | 5 | 6.5 | 7 | |
| Overall cake quality | 5a | 6.4b | 6.5b | 0.89 |
| Day 14 | | | | |
| *Touch, tactile properties* | | | | |
| Cake tenderness | 5 | 6.5 | 7 | |
| Cake softness | 5 | 7 | 7 | |
| *Eating properties* | | | | |
| Cake mouthfeel, gumminess, moistness, smoothness | 5 | 6.5 | 6.5 | |
| Cake chewiness | 5 | 6.5 | 7.5 | |
| Overall cake quality | 2.0a | 6.6b | 7.0b | 1.35 |
| Day 21 | | | | |
| *Touch, tactile properties* | | | | |
| Cake tenderness | 5 | 6 | 6 | |
| Cake softness | 5 | 6.5 | 6.5 | |
| *Eating properties* | | | | |
| Cake mouthfeel, gumminess, moistness, chewiness, smoothness | 5 | 6 | 6 | |
| Cake chewiness | 5 | 6 | 6.5 | |
| Overall cake quality | 5a | 6.1b | 6.3b | 1.00 |
| [1] Values in the same raw followed by different letters are statistically different using Fisher's LSD test at a level of significance of 5%. [2] LSD = least significant difference. | | | | |

In the preparation of sponge cakes use of a mixture with MAA both the PLA2 and the LPL significantly improved sensory attributes relative to the control prepared with only MAA. However, in contrast to the PLA2 the LPL did not negatively affect cake cohesiveness and hardness.

## Claims

1. A process for producing a sponge cake, the process comprising preparing a batter from ingredients comprising flour, egg, sugar, an enzyme having lysophospholipase activity and an enzyme having maltogenic alpha-amylase activity, and baking or steaming the batter to produce the sponge cake, wherein the lysophospholipase has at least 70% sequence identity to the mature polypeptide of SEQ ID NO:1.

2. The process of claim 1, wherein the lysophospholipase is fungal, preferably from *Aspergillus niger*, most preferably from *A. niger.*

3. The process of any preceding claim, wherein the lysophospholipase is an isolated polypeptide having an amino acid sequence which has at least 75%, at least 80%, at least 85%, at least 90%, at least 95%, at least 96%, at least 97%, at least 98%, at least 99%, at least 99.5%, or even at least 100% sequence identity to the mature polypeptide of SEQ ID NO: 1.

4. The process of any preceding claim, wherein the maltogenic alpha-amylase is from *Bacillus,* most preferably from *B. stearothermophilus.*

5. The process of any preceding claim, wherein the batter comprises an emulsifier selected from the group consisting of polyglycerol esters of fatty acid, mono- and diglycerides of fatty acid, acetic acid esters of mono- and diglycerides of fatty acids, lactic acid esters of mono- and di- glycerides, diacetyl tartaric acid esters of monoglycerides (DATEM), sodium stearoyl lactylate (SSL), calcium stearoyl lactylate (CSL), ethoxylated mono- and diglycerides (EMG), polysorbates (PS), succinylated monoglycerides (SMG) and mixtures thereof.

**Patentansprüche**

1. Verfahren zur Herstellung eines Biskuitkuchens, wobei das Verfahren Herstellen eines Kuchenteigs aus Zutaten umfassend Mehl, Ei, Zucker, ein Enzym mit Lysophospholipaseaktivität und ein Enzym mit maltogene-alpha-Amylase-Aktivität und Backen oder Dämpfen des Kuchenteigs zum Herstellen des Biskuitkuchens umfasst, wobei die Lysophospholipase wenigstens 70 % Sequenzidentität mit dem reifen Polypeptid von SEQ ID NO:1 aufweist.

2. Verfahren gemäß Anspruch 1, wobei die Lysophospholipase fungal ist, vorzugsweise aus *Aspergillus niger,* höchst bevorzugt aus *A. niger.*

3. Verfahren gemäß einem der vorstehenden Ansprüche, wobei die Lysophospholipase ein isoliertes Polypeptid mit einer Aminosäuresequenz ist, die wenigstens 75 %, wenigstens 80 %, wenigstens 85 %, wenigstens 90 %, wenigstens 95 %, wenigstens 96 %, wenigstens 97 %, wenigstens 98 %, wenigstens 99 %, wenigstens 99,5 % oder sogar wenigstens 100 % Sequenzidentität mit dem reifen Polypeptid von SEQ ID NO:1 aufweist.

4. Verfahren gemäß einem der vorstehenden Ansprüche, wobei die maltogene alpha-Amylase aus *Bacillus* ist, höchst bevorzugt aus *B. stearothermophilus.*

5. Verfahren gemäß einem der vorstehenden Ansprüche, wobei der Kuchenteig einen Emulgator ausgewählt aus der Gruppe bestehend aus Polyglycerolestern von Fettsäure, Mono- und Diglyceriden von Fettsäure, Essigsäureestern von Mono- und Diglyceriden von Fettsäuren, Milchsäureestern von Mono- und Diglyceriden, Diacetylweinsäureestern von Monoglyceriden (DATEM), Natriumstearoyllactylat (SSL), Calciumstearolyllactylat (CSL), ethoxylierten Mono- und Diglyceriden (EGM), Polysorbaten (PS), succinylierten Monoglyceriden (SMG) und Gemischen davon umfasst.

**Revendications**

1. Procédé de production d'un gâteau de type génoise, le procédé comprenant la préparation d'une pâte liquide à partir d'ingrédients comprenant de la farine, des oeufs, du sucre, une enzyme ayant une activité de lysophospholipase et une enzyme ayant une activité d'alpha-amylase maltogénique, et la cuisson ou l'étuvage de la pâte liquide afin de produire le gâteau de type génoise, dans lequel la lysophospholipase possède au moins 70% d'identité de séquence avec le polypeptide mature de SEQ ID n° 1.

2. Procédé selon la revendication 1, dans lequel la lysophospholipase est fongique, préférablement issue d'*Aspergillus niger,* tout préférablement d'*A. niger.*

3. Procédé selon l'une quelconque des revendications précédentes, dans lequel la lysophospholipase est un polypeptide isolé ayant une séquence d'acides aminés ayant au moins 75%, au moins 80%, au moins 85%, au moins 90%, au moins 95%, au moins 96%, au moins 97%, au moins 98%, au moins 99%, au moins 99,5%, voire au moins 100%, d'identité de séquence avec le polypeptide mature de SEQ ID n° 1.

4. Procédé selon l'une quelconque des revendications précédentes, dans lequel l'alpha-amylase maltogénique est issue de *Bacillus,* tout préférablement de *B. stearothermophilus.*

5. Procédé selon l'une quelconque des revendications précédentes, dans lequel la pâte liquide comprend un émulsifiant choisi dans le groupe constitué par les esters de polyglycérol et d'acides gras, les mono- et diglycérides d'acides gras, les esters d'acide acétique et de mono- et diglycérides d'acides gras, les esters d'acide lactique et de mono- et diglycérides, les esters d'acide diacétyltartrique et de monoglycérides (DATEM), le stéaroyl lactylate de sodium (SSL), le stéaroyl lactylate de calcium (CSL), les mono- et diglycérides éthoxylés (EMG), les polysorbates (PS), les monoglycérides succinylés (SMG), et des mélanges de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008092907 A
- WO 2001027251 A
- WO 2009106575 A
- WO 200124251 A
- WO 200127251 A
- US 200300100092 A
- WO 9831790 A
- WO 199517413 A
- WO 199522625 A
- US 5223409 A
- WO 199206204 A
- WO 198402921 A
- WO 1999050399 A
- WO 2004111217 A
- WO 2005003339 A
- WO 199826057 A
- WO 200032758 A

**Non-patent literature cited in the description**

- **NEEDLEMAN ; WUNSCH.** *J. Mol. Biol.,* 1970, vol. 48, 443-453
- EMBOSS: The European Molecular Biology Open Software Suite, Rice. *Trends Genet.,* 2000, vol. 16, 276-277
- **H. NEURATH ; R.L. HILL.** The Proteins. Academic Press, 1979
- **REIDHAAR-OLSON ; SAUER.** *Science,* 1988, vol. 241, 53-57
- **BOWIE ; SAUER.** *Proc. Natl. Acad. Sci. USA,* 1989, vol. 86, 2152-2156
- **LOWMAN et al.** *Biochemistry,* 1991, vol. 30, 10832-10837
- **DERBYSHIRE et al.** *Gene,* 1986, vol. 46, 145
- **NER et al.** *DNA,* 1988, vol. 7, 127
- **BOEL et al.** *EMBO J.,* 1984, vol. 3 (5), 1097-1102
- *Agric. Biol. Chem.,* 1991, vol. 55 (4), 941-949
- **NIEUWENHUIZEN et al.** *Methods in Enzymology,* 1974, vol. 32, 147-154
- **BETTGE A.D. ; MORRIS C.F.** *Cereal Chemistry,* 2007, vol. 84, 237-242
- **BOURNE M. C.** Food Texture and Viscosity: Concept and Measurement. Academic Press, 2002
- **WATTS B.M. ; YLIMAKI G.L. ; JEFFERY L.E. ; ELIAS L.G.** Basic Sensory Methods for Food Evaluation. International Development Research Center, 1989

SEQUENCE LISTING

<110> Novozymes A/S

<120> Method of baking

<130> 12377-WO-PCT

<160> 3

<170> PatentIn version 3.5

<210> 1
<211> 638
<212> PRT
<213> Aspergillus niger

<220>
<221> mat_peptide
<222> (38)..(638)

<400> 1

```
Met Lys Leu Pro Leu Phe Ala Ala Ala Ala Gly Leu Ala Asn Ala
    -35                 -30             -25

Ala Ser Leu Pro Val Glu Arg Ala Glu Ala Glu Val Ala Ser Val Ala
    -20                 -15             -10

Ala Asp Leu Ile Val Arg Ala Leu Pro Asn Ala Pro Asp Gly Tyr Thr
-5              -1  1             5                       10

Pro Ser Asn Val Thr Cys Pro Ser Thr Arg Pro Ser Ile Arg Asp Ala
            15                20                25

Ser Gly Ile Ser Thr Asn Glu Thr Glu Trp Leu Lys Val Arg Arg Asn
        30                35                40

Ala Thr Leu Thr Pro Met Lys Asn Leu Leu Ser Arg Leu Asn Leu Thr
    45                50                55

Gly Phe Asp Thr Thr Ser Tyr Ile Asn Glu His Ser Ser Asn Ile Ser
60              65                70                      75

Asn Ile Pro Asn Ile Ala Ile Ala Ala Ser Gly Gly Gly Tyr Arg Ala
            80                85                90

Leu Thr Asn Gly Ala Gly Ala Leu Lys Ala Phe Asp Ser Arg Ser Asp
            95                100               105

Asn Ala Thr Asn Ser Gly Gln Leu Gly Gly Leu Leu Gln Ala Ala Thr
        110               115               120
```

```
Tyr Val Ser Gly Leu Ser Gly Gly Ser Trp Leu Val Gly Ser Met Phe
    125             130             135

Val Asn Asn Phe Ser Ser Ile Gly Glu Leu Gln Ala Ser Glu Lys Val
140             145             150             155

Trp Arg Phe Asp Lys Ser Leu Leu Glu Gly Pro Asn Phe Asp His Ile
                160             165             170

Gln Ile Val Ser Thr Val Glu Tyr Trp Lys Asp Ile Thr Glu Glu Val
                175             180             185

Asp Gly Lys Ala Asn Ala Gly Phe Asn Thr Ser Phe Thr Asp Tyr Trp
            190             195             200

Gly Arg Ala Leu Ser Tyr Gln Leu Val Asn Ala Ser Asp Asp Lys Gly
    205             210             215

Gly Pro Asp Tyr Thr Trp Ser Ser Ile Ala Leu Met Asp Asp Phe Lys
220             225             230             235

Asn Gly Gln Tyr Pro Met Pro Ile Val Val Ala Asp Gly Arg Asn Pro
            240             245             250

Gly Glu Ile Ile Val Glu Thr Asn Ala Thr Val Tyr Glu Val Asn Pro
            255             260             265

Trp Glu Phe Gly Ser Phe Asp Pro Ser Val Tyr Ala Phe Ala Pro Leu
    270             275             280

Gln Tyr Leu Gly Ser Arg Phe Glu Asn Gly Ser Ile Pro Asp Asn Gly
    285             290             295

Thr Cys Val Ser Gly Phe Asp Asn Ala Gly Phe Ile Met Gly Ser Ser
300             305             310             315

Ser Thr Leu Phe Asn Gln Phe Leu Leu Gln Ile Asn Ser Thr Ser Ile
            320             325             330

Pro Thr Ile Leu Lys Asp Ala Phe Thr Asp Ile Leu Glu Asp Leu Gly
            335             340             345

Glu Arg Asn Asp Asp Ile Ala Val Tyr Ser Pro Asn Pro Phe Ser Gly
    350             355             360

Tyr Arg Asp Ser Ser Glu Asp Tyr Ala Thr Ala Lys Asp Leu Asp Val
    365             370             375
```

16

```
Val Asp Gly Gly Glu Asp Gly Glu Asn Ile Pro Leu His Pro Leu Ile
380             385             390                 395

Gln Pro Glu Arg Ala Val Asp Val Ile Phe Ala Ile Asp Ser Ser Ala
            400             405             410

Asp Thr Asp Tyr Tyr Trp Pro Asn Gly Thr Ser Leu Val Ala Thr Tyr
        415             420             425

Glu Arg Ser Leu Glu Pro Ser Ile Ala Asn Gly Thr Ala Phe Pro Ala
        430             435             440

Val Pro Asp Gln Asn Thr Phe Val Asn Leu Gly Leu Asn Ser Arg Pro
    445             450             455

Thr Phe Phe Gly Cys Asp Pro Lys Asn Ile Ser Gly Thr Ala Pro Leu
460             465             470                 475

Val Ile Tyr Leu Pro Asn Ser Pro Tyr Thr Tyr Asp Ser Asn Phe Ser
            480             485             490

Thr Phe Lys Leu Thr Tyr Ser Asp Glu Glu Arg Asp Ser Val Ile Thr
        495             500             505

Asn Gly Trp Asn Val Val Thr Arg Gly Asn Gly Thr Val Asp Asp Asn
        510             515             520

Phe Pro Ser Cys Val Ala Cys Ala Ile Leu Gln Ala Leu His Tyr Arg
    525             530             535

Thr Asn Thr Ser Leu Pro Asp Ile Cys Thr Thr Cys Phe Asn Asp Tyr
540             545             550                 555

Cys Trp Asn Gly Thr Thr Asn Ser Thr Thr Pro Gly Ala Tyr Glu Pro
            560             565             570

Ser Val Leu Ile Ala Thr Ser Gly Ala Ile Lys Ser Val Leu Asp Tyr
        575             580             585

Ser Val Leu Ala Leu Ala Met Gly Val Ala Ala Phe Met Leu
        590             595             600
```

<210> 2
<211> 146
<212> PRT
<213> Porcine pancreas

<400> 2

```
Met Lys Phe Leu Val Leu Ala Val Leu Leu Thr Val Gly Ala Ala Gln
1               5               10              15

Glu Gly Ile Ser Ser Arg Ala Leu Trp Gln Phe Arg Ser Met Ile Lys
            20              25              30

Cys Ala Ile Pro Gly Ser His Pro Leu Met Asp Phe Asn Asn Tyr Gly
            35              40              45

Cys Tyr Cys Gly Leu Gly Gly Ser Gly Thr Pro Val Asp Glu Leu Asp
    50              55              60

Arg Cys Cys Glu Thr His Asp Asn Cys Tyr Arg Asp Ala Lys Asn Leu
65              70              75              80

Asp Ser Cys Lys Phe Leu Val Asp Asn Pro Tyr Thr Glu Ser Tyr Ser
            85              90              95

Tyr Ser Cys Ser Asn Thr Glu Ile Thr Cys Asn Ser Lys Asn Asn Ala
            100             105             110

Cys Glu Ala Phe Ile Cys Asn Cys Asp Arg Asn Ala Ala Ile Cys Phe
            115             120             125

Ser Lys Ala Pro Tyr Asn Lys Glu His Lys Asn Leu Asp Thr Lys Lys
    130             135             140

Tyr Cys
145
```

<210> 3
<211> 686
<212> PRT
<213> Bacillus stearothermophilus

<220>
<221> mat_peptide
<222> (1)..(686)

<400> 3

```
Ser Ser Ser Ala Ser Val Lys Gly Asp Val Ile Tyr Gln Ile Ile Ile
1               5               10              15

Asp Arg Phe Tyr Asp Gly Asp Thr Thr Asn Asn Asn Pro Ala Lys Ser
            20              25              30

Tyr Gly Leu Tyr Asp Pro Thr Lys Ser Lys Trp Lys Met Tyr Trp Gly
```

|      | 35  |     |     | 40  |     |     | 45  |     |     |
|------|-----|-----|-----|-----|-----|-----|-----|-----|-----|

Gly Asp Leu Glu Gly Val Arg Gln Lys Leu Pro Tyr Leu Lys Gln Leu
    50                55                60

Gly Val Thr Thr Ile Trp Leu Ser Pro Val Leu Asp Asn Leu Asp Thr
   65               70             75             80

Leu Ala Gly Thr Asp Asn Thr Gly Tyr His Gly Tyr Trp Thr Arg Asp
              85            90              95

Phe Lys Gln Ile Glu Glu His Phe Gly Asn Trp Thr Thr Phe Asp Thr
      100              105           110

Leu Val Asn Asp Ala His Gln Asn Gly Ile Lys Val Ile Val Asp Phe
      115              120           125

Val Pro Asn His Ser Thr Pro Phe Lys Ala Asn Asp Ser Thr Phe Ala
      130              135           140

Glu Gly Gly Ala Leu Tyr Asn Asn Gly Thr Tyr Met Gly Asn Tyr Phe
145              150           155           160

Asp Asp Ala Thr Lys Gly Tyr Phe His His Asn Gly Asp Ile Ser Asn
            165          170           175

Trp Asp Asp Arg Tyr Glu Ala Gln Trp Lys Asn Phe Thr Asp Pro Ala
            180          185          190

Gly Phe Ser Leu Ala Asp Leu Ser Gln Glu Asn Gly Thr Ile Ala Gln
      195              200           205

Tyr Leu Thr Asp Ala Ala Val Gln Leu Val Ala His Gly Ala Asp Gly
      210              215           220

Leu Arg Ile Asp Ala Val Lys His Phe Asn Ser Gly Phe Ser Lys Ser
225              230           235           240

Leu Ala Asp Lys Leu Tyr Gln Lys Lys Asp Ile Phe Leu Val Gly Glu
            245          250           255

Trp Tyr Gly Asp Asp Pro Gly Thr Ala Asn His Leu Glu Lys Val Arg
      260              265           270

Tyr Ala Asn Asn Ser Gly Val Asn Val Leu Asp Phe Asp Leu Asn Thr
      275              280           285

Val Ile Arg Asn Val Phe Gly Thr Phe Thr Gln Thr Met Tyr Asp Leu
290 295 300

Asn Asn Met Val Asn Gln Thr Gly Asn Glu Tyr Lys Tyr Lys Glu Asn
305 310 315 320

Leu Ile Thr Phe Ile Asp Asn His Asp Met Ser Arg Phe Leu Ser Val
325 330 335

Asn Ser Asn Lys Ala Asn Leu His Gln Ala Leu Ala Phe Ile Leu Thr
340 345 350

Ser Arg Gly Thr Pro Ser Ile Tyr Tyr Gly Thr Glu Gln Tyr Met Ala
355 360 365

Gly Gly Asn Asp Pro Tyr Asn Arg Gly Met Met Pro Ala Phe Asp Thr
370 375 380

Thr Thr Thr Ala Phe Lys Glu Val Ser Thr Leu Ala Gly Leu Arg Arg
385 390 395 400

Asn Asn Ala Ala Ile Gln Tyr Gly Thr Thr Thr Gln Arg Trp Ile Asn
405 410 415

Asn Asp Val Tyr Ile Tyr Glu Arg Lys Phe Phe Asn Asp Val Val Leu
420 425 430

Val Ala Ile Asn Arg Asn Thr Gln Ser Ser Tyr Ser Ile Ser Gly Leu
435 440 445

Gln Thr Ala Leu Pro Asn Gly Ser Tyr Ala Asp Tyr Leu Ser Gly Leu
450 455 460

Leu Gly Gly Asn Gly Ile Ser Val Ser Asn Gly Ser Val Ala Ser Phe
465 470 475 480

Thr Leu Ala Pro Gly Ala Val Ser Val Trp Gln Tyr Ser Thr Ser Ala
485 490 495

Ser Ala Pro Gln Ile Gly Ser Val Ala Pro Asn Met Gly Ile Pro Gly
500 505 510

Asn Val Val Thr Ile Asp Gly Lys Gly Phe Gly Thr Thr Gln Gly Thr
515 520 525

Val Thr Phe Gly Gly Val Thr Ala Thr Val Lys Ser Trp Thr Ser Asn
530 535 540

```
Arg Ile Glu Val Tyr Val Pro Asn Met Ala Ala Gly Leu Thr Asp Val
545             550         555             560

Lys Val Thr Ala Gly Gly Val Ser Ser Asn Leu Tyr Ser Tyr Asn Ile
                565             570             575

Leu Ser Gly Thr Gln Thr Ser Val Val Phe Thr Val Lys Ser Ala Pro
            580             585             590

Pro Thr Asn Leu Gly Asp Lys Ile Tyr Leu Thr Gly Asn Ile Pro Glu
            595             600             605

Leu Gly Asn Trp Ser Thr Asp Thr Ser Gly Ala Val Asn Asn Ala Gln
    610             615             620

Gly Pro Leu Leu Ala Pro Asn Tyr Pro Asp Trp Phe Tyr Val Phe Ser
625             630             635             640

Val Pro Ala Gly Lys Thr Ile Gln Phe Lys Phe Phe Ile Lys Arg Ala
            645             650             655

Asp Gly Thr Ile Gln Trp Glu Asn Gly Ser Asn His Val Ala Thr Thr
            660             665             670

Pro Thr Gly Ala Thr Gly Asn Ile Thr Val Thr Trp Gln Asn
            675             680             685
```